(19) Europäisches Patentamt
European Patent Office
Office européen des brevets

(11) **EP 4 380 836 B1**

(12) # EUROPÄISCHE PATENTSCHRIFT

(45) Veröffentlichungstag und Bekanntmachung des Hinweises auf die Patenterteilung:
**25.03.2026 Patentblatt 2026/13**

(21) Anmeldenummer: **22758550.2**

(22) Anmeldetag: **03.08.2022**

(51) Internationale Patentklassifikation (IPC):
***B60W 60/00*** *(2020.01)* ***B60W 50/023*** *(2012.01)*
***B60W 50/04*** *(2006.01)*

(52) Gemeinsame Patentklassifikation (CPC):
**B60W 60/0011; B60W 50/023; B60W 50/045; B60W 60/0015; B60W 60/0017**

(86) Internationale Anmeldenummer:
**PCT/EP2022/071876**

(87) Internationale Veröffentlichungsnummer:
**WO 2023/012243 (09.02.2023 Gazette 2023/06)**

(54) **SYSTEM, VERFAHREN UND SOFTWARE ZUM BETREIBEN EINES FAHRERASSISTENZSYSTEMS**

SYSTEM, METHOD AND SOFTWARE FOR OPERATING A DRIVER ASSISTANCE SYSTEM

SYSTÈME, PROCÉDÉ ET LOGICIEL POUR FAIRE FONCTIONNER UN SYSTÈME D'AIDE À LA CONDUITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.08.2021 DE 102021120391**

(43) Veröffentlichungstag der Anmeldung:
**12.06.2024 Patentblatt 2024/24**

(60) Teilanmeldung:
**26157802.5**

(73) Patentinhaber: **Bayerische Motoren Werke Aktiengesellschaft
80809 München (DE)**

(72) Erfinder:
• **KAULE, Dirk
80807 München (DE)**
• **CERDEIRO, Mariano
80993 München (DE)**
• **HEITE, Moritz
81541 München (DE)**

(56) Entgegenhaltungen:
**DE-A1- 102013 213 169    DE-A1- 102021 000 369
US-A1- 2018 052 453**

**Beschreibung**

Die Erfindung betrifft ein System und ein Verfahren zum Betreiben eines Fahrerassistenzsystems eines Fahrzeugs. Darüber hinaus betrifft die Erfindung eine Software mit Programmcode zur Durchführung eines solchen Verfahrens, wenn die Software auf einer oder mehreren softwaregesteuerten Rechenvorrichtungen abläuft.

Die Erfindung kann insbesondere im Rahmen eines Fahrerassistenzsystems (FAS) eingesetzt werden, wobei die Längs- und/oder Querführung des Fahrzeugs in der Weise geregelt wird, dass eine durch das FAS vorgegebene Fahraufgabe erfüllt wird. Dabei kann das FAS ein wenigstens teilweise automatisiertes Fahren, ggf. bis hin zum vollautomatisierten Fahren, des Fahrzeugs ermöglichen.

Unter dem Begriff "automatisiertes Fahren" wird im Rahmen des Dokuments ein Fahren mit automatisierter Längs- und/oder Querführung verstanden. Beim automatisierten Fahren kann es sich beispielsweise um ein zeitlich längeres Fahren auf der Autobahn oder um ein zeitlich begrenztes Fahren im Rahmen des Einparkens handeln. Der Begriff "automatisiertes Fahren" umfasst automatisiertes Fahren mit einem beliebigen Automatisierungsgrad. Beispielhafte Automatisierungsgrade sind assistiertes, teilautomatisiertes, hochautomatisiertes, vollautomatisiertes und autonomes Fahren (mit jeweils zunehmendem Automatisierungsgrad). Die vorstehend genannten fünf Automatisierungsgrade entsprechen den SAE-Level 1 bis 5 der Norm SAE J3016 (SAE - Society of Automotive Engineering). Beim assistierten Fahren (SAE-Level 1) führt das System die Längs- oder Querführung in bestimmten Fahrsituationen durch. Beim teilautomatisierten Fahren (SAE-Level 2) übernimmt das System die Längs- und Querführung in bestimmten Fahrsituationen, wobei der Fahrer das System wie beim assistierten Fahren dauerhaft überwachen muss. Beim hochautomatisierten Fahren (SAE-Level 3) übernimmt das System die Längs- und Querführung in bestimmten Fahrsituationen, ohne dass der Fahrer das System dauerhaft überwachen muss; der Fahrer muss aber in einer gewissen Zeit in der Lage sein, die Fahrzeugführung auf Anforderung durch das System zu übernehmen. Beim vollautomatisierten Fahren (SAE-Level 4) übernimmt das System die Fahrzeugführung in bestimmten Fahrsituationen, selbst wenn der Fahrer auf eine Anforderung zum Eingreifen nicht reagiert, so dass der Fahrer als Rückfallebene entfällt. Beim autonomen Fahren (SAE-Level 5) können vom System alle Aspekte der dynamischen Fahraufgabe unter jeder Fahrbahn- und Umgebungsbedingung durchgeführt werden, welche auch von einem menschlichen Fahrer beherrscht werden. Der SAE-Level 5 entspricht somit einem fahrerlosen Fahren, bei dem das System während der ganzen Fahrt alle Situationen wie ein menschlicher Fahrer automatisch bewältigen kann; ein Fahrer ist generell nicht mehr erforderlich.

Bei der Entwicklung von FAS, die ein automatisiertes Fahren ermöglichen, ist ein zentrales Sicherheitsziel eine zuverlässige Validierung von geplanten Fahrzeugtrajektorien hinsichtlich ihrer Sicherheit. Dies trifft insbesondere auf FAS ab dem SAE-Level 3 zu, da der Fahrer hier nicht mehr als ein das System kontinuierlich überwachendes Korrektiv zur Verfügung steht. Für derartige fortgeschrittene FAS wird daher teilweise eine Absicherung gemäß der Integritätsstufe ASIL (Automotive Safety Integrity Level) D nach ISO 26262 gefordert. Dabei besteht die Herausforderung, mitunter sehr anspruchsvolle FAS-Funktionen, wie z.B. das automatisierte Durchführen eines Überholvorgangs, einerseits zuverlässig abzusichern und andererseits dadurch die Funktionsverfügbarkeit möglichst wenig einzuschränken.

Die US 2018/052453 A1 beschreibt ein Verfahren, mit dem ein komplexes elektronisches System zur Steuerung eines sicherheitskritischen technischen Prozesses, beispielsweise zum Fahren eines autonomen Fahrzeugs, implementiert werden kann. Es wird zwischen einfacher und komplexer Software entschieden, wobei die einfache Software auf einer fehlertoleranten Hardware implementiert ist und wobei mehrere verschiedene Versionen der komplexen Software gleichzeitig in unabhängigen Fehlerbegrenzungseinheiten (FCU) implementiert werden. Ein Ergebnis, das an die Aktuatoren übertragen werden soll, wird von einem Entscheider, die mit der einfachen Software implementiert ist, aus den Ergebnissen der komplexen Software ausgewählt.

Die DE 10 2013 213169 A1 schlägt ein Verfahren und eine Vorrichtung zum Betreiben eines Kraftfahrzeugs in einem automatisierten Fahrbetrieb vor, bei dem in zwei Einrichtungen die momentane Position und die momentan im Fahrzeugumfeld befindlichen Objekte und Freiflächen ermittelt werden, dann durch zwei Planungseinrichtungen jeweils eine Trajektorie zur selbstständigen Fahrzeugführung ermittelt werden, dann in zwei Regelungseinrichtungen jeweils Steuersignale für Aktoreinrichtungen ermittelt werden und längsdynamikbeeinflussende und querdynamikbeeinflussende Aktoren zur Fahrzeugsteuerung gemäß der zuvor berechneten Trajektorie angesteuert werden. Durch das Verdoppeln der jeweiligen Einrichtungen und die Übertragung von Signalen auf unterschiedlichen Signalübertragungswegen zwischen diesen Einrichtungen wird eine hohe Ausfallsicherheit und Betriebszuverlässigkeit ermöglicht.

Die DE 10 2021 000369 A1 beschreibt ein Verfahren zur Steuerung eines automatisiert fahrenden Fahrzeuges bei Eintritt eines Fehlerereignisses, wobei mittels eines Hauptsteuergerätes des Fahrzeuges während einer Normalfunktion des automatisierten Fahrbetriebes fortlaufend eine Notfallsolltrajektorie ermittelt, an ein Bremssteuersystem übermittelt und in diesem gespeichert wird, wobei jeweils eine zuletzt gespeicherte Notfallsolltrajektorie bei einem eingetretenen Fehlerereignis, bei welchem eine Anwendung einer regulären Solltrajektorie nicht mehr möglich ist, zur Trajektorienregelung angewendet wird. Dabei ist vorgesehen, dass das Hauptsteuergerät redundant ausgeführt ist und ein Antriebssteuersystem vorgesehen ist; die mittels des Hauptsteuergerätes ermittelte Notfallsolltrajektorie zusätzlich an ein redundant ausgeführtes Lenksystem und an das Antriebssteuersystem übermittelt und gespeichert wird; und im Fall, dass ein Fehlerereignis in Bezug auf eine redundant ausgeführte Verbindung zwischen dem redundant ausgeführten Hauptsteuergerät und der redundant ausgeführten Bremssteuereinheit, einem redundant ausgeführten Lenksystem oder dem Antriebssteuersystem eintritt, mittels des Bremssteuersystems, des Lenksystems und/oder des Antriebssteuersystems die zuletzt gespeicherte Notfallsolltrajektorie zur Trajektorienregelung angewendet wird.

Es ist eine Aufgabe der vorliegenden Erfindung, ein System und ein Verfahren zum Betreiben eines FAS anzugeben, welches eine zuverlässige und zugleich effiziente Absicherung einer Trajektorienplanung umfasst.

Die Aufgabe wird durch ein System und ein Verfahren gemäß den unabhängigen Patentansprüchen gelöst. Vorteilhafte Ausführungsformen sind in den abhängigen Ansprüchen angegeben.

Es wird darauf hingewiesen, dass zusätzliche Merkmale eines von einem unabhängigen Patentanspruch abhängigen Patentanspruchs ohne die Merkmale des unabhängigen Patentanspruchs oder nur in Kombination mit einer Teilmenge der Merkmale des unabhängigen Patentanspruchs eine eigene und von der Kombination sämtlicher Merkmale des unabhängigen Patentanspruchs unabhängige Erfindung bilden können, die zum Gegenstand eines unabhängigen Patentanspruchs, einer Teilungsanmeldung oder einer Nachanmeldung gemacht werden kann. Dies gilt in gleicher Weise für in der Beschreibung erläuterte technische Lehren, die eine von den Merkmalen der unabhängigen Patentansprüche unabhängige Erfindung bilden können.

Ein erster Aspekt der Erfindung betrifft ein System zum Betreiben eines Fahrerassistenzsystems eines Fahrzeugs. Das Fahrzeug wird im Folgenden mitunter auch als Ego-Fahrzeug bezeichnet.

Bei dem Fahrzeug kann es sich insbesondere um ein Kraftfahrzeug handeln. Unter dem Begriff Kraftfahrzeug kann dabei insbesondere ein Landfahrzeug, das durch Maschinenkraft bewegt wird, ohne an Bahngleise gebunden zu sein, verstanden werden. Ein Kraftfahrzeug in diesem Sinne kann z.B. als Kraftwagen, Kraftrad oder Zugmaschine ausgebildet sein.

Das Fahrzeug ist mit einem Fahrerassistenzsystem (FAS) ausgestattet. Das FAS kann eingerichtet sein, Funktionen im Rahmen eines wenigstens teilweise automatisierten Fahrens auszuführen, wie z.B. eine ACC-Funktion (d.h. eine kombinierte Geschwindigkeits- und Abstandsregelung), eine Spurwechselassistenzfunktion (SWA), einen Lenk- und Spurführungsassistenten (LSA), eine Parkassistenzfunktion oder dergleichen.

Insbesondere kann das FAS eingerichtet sein, ein automatisiertes Fahren ab SAE-Level 3 (d.h. mindestens hochautomatisiertes Fahren) zu ermöglichen.

Das System umfasst ein erstes Teilsystem, das eingerichtet ist, ein erstes Umfeldmodell zu erzeugen und eine oder mehrere erste Trajektorien für das Fahrzeug in Abhängigkeit von dem ersten Umfeldmodell zu planen. Weiter umfasst das System ein zweites Teilsystem, das eingerichtet ist, ein zweites Umfeldmodell zu erzeugen und eine oder mehrere zweite Trajektorien in Abhängigkeit von dem zweiten Umfeldmodell zu planen. Dabei sind das erste Teilsystem und das zweite Teilsystem jeweils eingerichtet, eine Sicherheitsbewertung sowohl der einen oder der mehreren ersten Trajektorien als auch der einen oder der mehreren zweiten Trajektorien anhand einer (insbesondere anhand derselben) Metrik durchzuführen.

Hierbei liegt der Erfindung der Gedanke zu Grunde, dass eine zuverlässige und effiziente Absicherung von geplanten Trajektorien im Rahmen eines FAS dadurch ermöglicht werden kann, dass zwei oder mehr "Kanäle" vorgesehen sein können. Beispielsweise kann das erste Teilsystem auch als primärer ASIL-Kanal oder kurz "PAC" (für Englisch: "Primary ASIL Channel") bezeichnet werden, und das zweite Teilsystem kann auch als sekundärer ASIL-Kanal oder kurz "SAC" (für Englisch: "Secondary ASIL Channel") bezeichnet werden. Die unterschiedlichen Kanäle erstellen unabhängig voneinander jeweils ein Umfeldmodell und planen darauf basierend eine oder mehrere Trajektorien. Dabei sind die mehreren Trajektorien zueinander alternativ, d.h. sie sind z.B. für denselben zeitlichen Planungshorizont der Trajektorienplanung des Fahrzeugs vorgesehen.

Darüber hinaus bewerten die Kanäle sowohl ihre eigenen Trajektorien als auch die von dem oder den anderen Kanälen geplanten Trajektorien anhand einer Metrik, z.B. mittels definierter "Safety Scores". Dabei können die Kanäle z.B. basierend auf ähnlichen Spezifikationen, jedoch bevorzugt völlig unabhängig voneinander, entwickelt worden sein. Hierdurch lassen sich sogenannte Common-Cause-Fehler vermeiden.

Da die unterschiedlichen Kanäle, wie erwähnt, unabhängig voneinander entwickelt worden sein können, können sich die verwendeten Trajektorienstrategien voneinander unterscheiden. Es wäre in einem solchen Fall daher nicht zielführend, eine Sicherheitsbewertung auszuführen, indem geprüft wird, ob Trajektorien von unterschiedlichen Kanälen identisch sind. Ziel des hier vorgeschlagenen Konzepts ist es nämlich nicht etwa, die unterschiedlichen Kanäle dazu zu bringen, in ihrer Fahr- bzw. Trajektorienstrategie übereinzustimmen. Vielmehr sollen die Trajektorien gemäß dem hier vorgeschlagenen Konzept jeweils von den wenigstens zwei Kanälen anhand einer eindeutigen Metrik bewertet werden, wobei diese Sicherheitsbewertung in der Folge bei einer Auswahl der tatsächlich umzusetzenden Trajektorie berücksichtigt werden kann.

Prinzipiell kann das System auch mehr als zwei, wie z.B. drei, derartige Kanäle bzw. Teilsysteme umfassen. Es müssen jedoch mindestens zwei Kanäle, in Form des ersten Teilsystems und des zweiten Teilsystems, vorhanden sein.

Das erste Teilsystem und das zweite Teilsystem können eingerichtet sein, das jeweilige Umfeldmodell insbesondere auf der Grundlage von Umfeldsensordaten, die von einer Umfeldsensorik des Fahrzeugs bereitgestellt werden, zu erzeugen. Ferner können beispielsweise auch Navigationssystemdaten, Kartendaten usw. als Grundlage für das jeweilige Umfeldmodell berücksichtigt werden.

Das erste Teilsystem und das zweite Teilsystem können ganz oder teilweise auf dieselben Daten (wie z.B. Umfeldsensordaten) als Grundlage für ihr jeweiliges Umfeldmodell zurückgreifen und insbesondere Umfeldsensordaten verwenden die ganz oder teilweise auf dieselben Umfeldsensoren des Fahrzeugs zurückgehen. Das eigentliche Erzeugen des Umfeldmodells auf der Grundlage dieser Daten erfolgt jedoch bei dem zweiten Teilsystem unabhängig von dem ersten Teilsystem. Es sind auch Ausführungsformen denkbar, bei welchen die Daten, die als Grundlage für das Erzeugen des jeweiligen Umfeldmodells dienen, ganz oder teilweise aus unterschiedlichen Quellen bereitgestellt werden, wie z.B. von unterschiedlichen Umfeldsensoren, insbesondere Umfeldsensoren, die auf unterschiedlichen physikalischen Messprinzipien beruhen.

Das erste Teilsysteme und das zweite Teilsystem können z.B. jeweils eine oder mehrere Rechenvorrichtungen, wie z.B. Steuergeräte, umfassen, welche zum Erzeugen des jeweiligen Umfeldmodells, zum Planen der jeweiligen Trajektorie(n) sowie zum Durchführen der Sicherheitsbewertungen eingerichtet, d.h. insbesondere programmiert, sind. Dabei können auf der oder den Rechenvorrichtungen entsprechende Softwaremodule, wie z.B. ein erstes bzw. zweites Umfeldmodellmodul des ersten bzw. zweiten Teilsystems, ein erster bzw. zweiter Trajektorienplaner des ersten bzw. zweiten Teilsystems und ein erster bzw. zweiter Validator des ersten bzw. zweiten Teilsystems ausgeführt werden.

Die Trajektorienplaner sind jeweils eingerichtet, Soll-Trajektorien-Größen für eine Trajektorie des Fahrzeugs zu ermitteln. Dabei können die Soll-Trajektorien-Größen insbesondere in Abhängigkeit von einer, z.B. durch ein FAS vorgegebenen, Fahraufgabe bestimmt werden.

Die Validatoren sind jeweils eingerichtet, die Sicherheit der erste(n) und zweite(n) Trajektorie(n) anhand der Metrik zu bewerten.

Eine zu bewertende Trajektorie kann dabei in Form einer Liste von Punkten in Raum und Zeit vorliegen. Dabei kann die Trajektorie eine Startposition und einen Startzeitstempel enthalten. Beispielsweise kann eine geplante Trajektorie eine Liste von aufeinanderfolgenden Zeitpunkten zugeordneten Punkten in einem zweidimensionalen kartesischen Koordinatensystem sein, die an der aktuellen Fahrzeugposition beginnt und sich über einen definierten zeitlichen Horizont in die Zukunft erstreckt, der z.B. mindestens 4,5 Sekunden und maximal 6 Sekunden lang sein kann.

Gemäß einer Ausführungsform umfasst das System eine oder mehrere erste Rechenvorrichtungen und eine oder mehrere von der oder den ersten Rechenvorrichtungen verschiedene zweite Rechenvorrichtungen. Dabei ist das erste Teilsystem eingerichtet, das Erzeugen des ersten Umfeldmodells, das Planen des oder der ersten Trajektorien und das Durchführen der Sicherheitsbewertung mittels der einen oder der mehreren ersten Rechenvorrichtungen auszuführen. Das zweite Teilsystem ist eingerichtet, das Erzeugen des zweiten Umfeldmodells, das Planen des oder der zweiten Trajektorien und das Durchführen der Sicherheitsbewertung mittels der einen oder der mehreren zweiten Rechenvorrichtungen auszuführen. Mit anderen Worten kann vorgesehen sein, dass das erste Teilsystem und das zweite Teilsystem das Erzeugen des jeweiligen Umfeldmodells, das Planen der jeweiligen Trajektorie(n) und das Durchführen der Sicherheitsbewertungen hardwaretechnisch unabhängig voneinander ausführen. Durch eine solche Hardware-Diversität können Common-Cause-Fehler noch zuverlässiger ausgeschlossen werden.

Allgemein kann vorgesehen sein, dass das erste Teilsystem und das zweite Teilsystem als ASIL-dekomponierte Systeme umgesetzt sind. Dies bedeutet, dass durch Hardware- und Softwarediversität ein möglichst unabhängiger Betrieb der Teilsysteme, insbesondere hinsichtlich der Umfeldmodellerzeugung, der Trajektorienplanung und der Sicherheitsbewertung, sichergestellt ist.

Das Durchführen der Sicherheitsbewertung umfasst ein Zuordnen eines zahlenmäßigen Sicherheitswerts entsprechend der Metrik zu jeder der ersten und zweiten Trajektorien. Dieser Sicherheitswert wird im Folgenden mitunter auch mit dem englischen Begriff "Safety Score" bezeichnet. Beispielsweise kann der Safety Score so definiert sein, dass er umso höher ausfällt je unsicherer die betreffende Trajektorie mit Blick auf mögliche Kollisionen ist.

Der Safety Score kann z.B. insbesondere Informationen darüber beinhalten, wie wahrscheinlich die betrachtete Trajektorie kollisionsfrei oder zumindest frei von Kollisionen ab einer bestimmten Schadensschwere ist. Dabei kann zwischen möglichen Kollisionen mit unterschiedlichen zu erwartenden Schadensschweren, wie z.B. den potenziellen Schadensschweren S0, S1, S2, S3, ... gemäß der Norm ISO 26262 zur Funktionalen Sicherheit für Serienfahrzeuge, unterschieden werden. Es können aber auch von dieser Norm abweichende Definitionen von Schadensschweren zu Grunde gelegt werden.

Beispielsweise fallen gemäß einer Ausführungsform Kollisionen, bei welchen die Geschwindigkeitsdifferenz zwischen Ego-Fahrzeug und Kollisionsobjekt geringer als 60 km/h ist, in die Kategorie S0 oder S1; die Schadensschwere S2 wird angenommen für eine Geschwindigkeitsdifferenz im Bereich von 60 km/h bis 70 km/h; und bei Geschwindigkeitsdifferenzen, die größer als 70 km/h sind, wird eine Schadensschwere S3 oder höher (Schadensschwere "S3+") angenommen. Diese beispielhafte Definition von Schadensschweren S0, S1, S2, S3+ kann dabei z.B. insbesondere auf Autobahnen oder autobahnähnlichen Straßen, wie etwa deutschen Kraftfahrstraßen, gelten, wo nicht mit der Anwesenheit von Fußgängern im Bereich der Fahrbahn zu rechnen ist. In anderen Bereichen, z.B. im innerstädtischen Verkehr, können abweichende Definitionen gelten, da bei einer Kollision mit einem Fußgänger beispielsweise bereits bei einer Fahrzeuggeschwindigkeit von 5 km/h größere Schadensschweren wie S2 oder S3 erreicht werden.

Beispielsweise können das erste Teilsystem und das zweite Teilsystem eingerichtet sein, den jeweiligen Sicherheitswert in Abhängigkeit von einer Zeitangabe zu bestimmen, welche angibt, wie viel Zeit beim Fahren der jeweiligen Trajektorie (unter Berücksichtigung des jeweiligen Umfeldmodells sowie optional weiterer Ego-Fahrzeugdaten) verbleiben würde, um Maßnahmen zur Vermeidung einer Kollision einer definierten Schadensschwere mit einem Objekt im Fahrzeugumfeld zu ergreifen. Die Zeitangabe kann auch mit dem englischen Begriff Time-to-react (kurz TTR) bezeichnet werden. Dabei können bestimmte auf eine jeweilige Schadensklasse, wie z.B. S0, S1, S2, S3, bezogene TTRs eine Rolle spielen. So kann z.B. eine Zeitangabe $TTR_{Si}$ (mit i = 0, 1, 2, 3, ...) eine Aussage darüber treffen, wie viel Zeit für Gegenmaßnahmen verbleibt, um eine Kollision mit der Schadensschwere $S_i$ (z.B. durch eine Bremsung) zu verhindern. Hierdurch kann z.B. unterschieden werden, wie viel Zeit verbleibt, um eine Kollision ganz zu verhindern und wie viel Zeit verbleibt, um eine (wahrscheinlich) tödliche Kollision zu verhindern.

Hierbei liegt der Erfindung der Gedanke zu Grunde, als wesentliche Grundlage für die Sicherheitsbewertung einer geplanten Trajektorie nicht etwa lediglich eine Time-to-collision (kurz TTC) anzunehmen, sondern eine oder mehrere - bevorzugt nach potenzieller Schadensschwere aufgeschlüsselte - TTR bzw. $TTR_{Si}$. Hierdurch lässt sich eine nuancierte Sicherheitsbewertung realisieren.

Der im Rahmen der Sicherheitsbewertung einer Trajektorie zugeordnete Sicherheitswert kann in Abhängigkeit von mehreren unterschiedlichen $TTR_{Si}$ (z.B. mit i = 0, 1, 2, 3) berechnet werden, wobei z.B. eine Gewichtung von jeweiligen Termen (welche die $TTR_{Si}$ mit i = 0, 1, 2 bzw. 3 berücksichtigen) mittels unterschiedlicher Koeffizienten vorgenommen werden kann. Dabei kann bei der Berechnung des Sicherheitswerts z.B. ein Term, der eine einer vergleichsweise hohen Schadensschwere zugeordnete Zeitangabe, wie z.B. $TTR_{S3}$, berücksichtigt, deutlich höher gewichtet werden als ein Term mit einer vergleichsweise geringen Schadensschwere, wie z.B. $TTR_{S1}$, denn es gilt natürlich immer die Maxime, das Risiko von Personenschäden zu minimieren. Es ist dabei auch möglich, dass die unterschiedlichen Koeffizienten empirisch an ein möglichst sicheres und zugleich komfortables Fahrverhalten angepasst ("gefittet") werden.

Bei der Berechnung des Sicherheitswerts kann ferner eine "Minimum time to react" $MTTR_{Si}$ eine Rolle spielen, d.h. ein Schwellwert, der eine gerade noch akzeptable Mindestzeit angibt, die für Maßnahmen zur Verhinderung einer Kollision mit der potenziellen Schadensschwere $S_i$ immer verbleiben muss. Bei der Berechnung des Sicherheitswerts kann eine $TTR_{Si}$ zu einer $MTTR_{Si}$ mathematisch in Beziehung gesetzt werden, wie z.B. in Form einer Differenz aus beiden Größen, die im Exponenten einer Exponentialfunktion auftaucht.

Beispielsweise wird gemäß einer Ausführungsform der (Gesamt-)Sicherheitswert *Score* wie folgt aus mehreren Teil-Sicherheitswerten $Score_{Si}$ (z.B. mit i = 1, 2, 3+) berechnet, die sich jeweils auf eine potenzielle Schadensschwere $S_i$ beziehen:

$$Score = \sqrt{Score_{S1}^2 + Score_{S2}^2 + Score_{S3+}^2}$$

Dabei können die Teil-Sicherheitswerte $Score_{Si}$ jeweils in Abhängigkeit von der der betrachteten Traktorie zugeordneten $TTR_{Si}$ und einer jeweiligen $MTTR_{Si}$ berechnet werden als

$$Score_{Si} = a_{i1}e^{(MTTR\_Si - TTR\_Si)} * a_{i2}e^{-\lambda * TTR\_Si}.$$

Die Faktoren $a_{i1}$, $a_{i2}$ und $\lambda$ können für jeden Validator angepasst werden und können dabei insbesondere als Möglichkeit genutzt werden, die Berechnung des Safety Scores in beiden Validatoren anzugleichen, um für eine gegebene Trajektorie von beiden Validatoren nahezu das gleiche Ergebnis für den Safety Score zu erhalten. Aufgrund unterschiedlicher Umweltmodelle und leicht unterschiedlicher Eingaben sind im Allgemeinen gewisse Abweichungen zwischen den Berechnungen zu erwarten.

In der Praxis kann die Berechnung der Teil-Sicherheitswerte $Score_{Si}$ für ein jeweiliges $TTR_{Si}$ als Input z.B. mittels einer Look-up-Tabelle erfolgen, um Rechenzeit zu sparen.

Gemäß einer Ausführungsform sind das erste Teilsystem und das zweite Teilsystem eingerichtet, den jeweiligen Sicherheitswert in Abhängigkeit von einer Geschwindigkeit des Ego-Fahrzeugs, einer Geschwindigkeit eines vor dem Ego-Fahrzeug fahrenden Fahrzeugs und einem Abstand zwischen dem Ego-Fahrzeug und dem vor dem Ego-Fahrzeug fahrenden Fahrzeug zu bestimmen.

Beispielsweise können insbesondere die $TTR_{Si}$ auf der Grundlage derartiger physikalischer Parameter und einer Definition der unterschiedlichen Schadensschweren unter Annahme eines Worst-Case-Szenario bestimmt werden. So kann z.B. in einem Worst-Case-Szenario angenommen werden, dass ein vorausfahrendes Fahrzeug am Ende des Sichthorizonts auftaucht und sodann abrupt mit einer negativen Beschleunigung von 10 ms$^{-2}$ bremst, worauf das Ego-Fahrzeug mit einer Bremsung bei (maximal) 6 ms$^{-2}$ reagieren kann.

Als Referenz für die Berechnung des Sicherheitswerts kann z.B. ein Szenario der folgenden Art angesehen werden, das als sicher angesehen wird: Zwei Fahrzeuge fahren hintereinander auf der gleichen Spur mit einer Geschwindigkeit von 130 km/h. Der Abstand zwischen beiden Fahrzeugen beträgt 65 m (halber Betrag der Geschwindigkeit in Metern), was als sicher eingestuft wird.

Es liegt ferner im Rahmen der Erfindung, dass der Sicherheitswert in Abhängigkeit von Objekttypen berechnet werden kann. Das bedeutet, dass z.B. eine Trajektorie, die bei einer bestimmten TTR das Risiko einer Kollision bei einer Geschwindigkeit von 10 km/h mit einem ungeschützten Verkehrsteilnehmer VRU ("vulnerable road user") beinhaltet, eine deutlich schlechtere Sicherheitsbewertung erhält als eine Trajektorie, die das Risiko einer Kollision mit einem anderen Kraftfahrzeug bei derselben Geschwindigkeit und derselben TTR mit sich bringt.

Da im Allgemeinen jede zu bewertende Trajektorie mehreren Punkte umfasst, kann vorgesehen sein, dass wird für jeden Punkt innerhalb der Trajektorie ein Safety Score berechnet wird, wobei der maximale berechnete Safety Score aller Punkte als Safety Score der Trajektorie betrachtet und ggf. zur Weiterverarbeitung an einen Selektor ausgegeben wird, wie im Folgenden beschrieben.

Das System umfasst ferner ein drittes Teilsystem, wobei das erste Teilsystem und das zweite Teilsystem jeweils eingerichtet sind, ein Ergebnis der Sicherheitsbewertung(en) an das dritte Teilsystem auszugeben, und wobei das dritte Teilsystem eingerichtet ist, anhand der Ergebnisse der Sicherheitsbewertungen eine der geplanten ersten oder zweiten Trajektorien auszuwählen und an ein Steuerungssystem des Fahrerassistenzsystems, wie z.B. an einen Trajektorienfolgeregler, auszugeben. Entsprechend seiner Funktion, eine Trajektorie auszuwählen, kann das dritte Teilsystem auch als Selektor bezeichnet werden.

Das dritte Teilsystem kann z.B. eine oder mehrere Rechenvorrichtungen umfassen, auf welchen ein Softwaremodul zur Auswahl einer Trajektorie ausgeführt wird. Dabei ist es zur Vermeidung von Common-Cause-Fehlern bevorzugt, dass die Rechenvorrichtung(en), die das dritte Teilsystem verwendet, von den Rechenvorrichtungen, die das erste und das zweite Teilsystem verwenden, separat ist bzw. sind.

Da der Selektor selbst z.B. keine Umfeldsensorinformationen oder detaillierte Trajektoriendaten verarbeiten muss, sondern seine Auswahl lediglich auf Basis der ihm übermittelten Sicherheitsbewertungen treffen kann, kann er hard- und softwaretechnisch vergleichsweise einfach ausgestaltet sein. Vor dem Hintergrund, dass zumeist von einem gewissen Trade-off zwischen der Komplexität und der Zuverlässigkeit eines Systems ausgegangen werden kann, erlaubt die hier vorgeschlagene Arbeitsteilung der drei separaten Teilsysteme somit eine vergleichsweise zuverlässige Ausgestaltung aller drei Teilsysteme, und zwar insbesondere des vergleichsweise einfach gehaltenen Selektors.

Beispielsweise kann vorgesehen sein, dass das erste Teilsystem und das zweite Teilsystem mit ihren jeweiligen Funktionen, d.h. der Umfeldmodellerzeugung und der Planung und Bewertung erster und zweiter Trajektorien, jeweils den Funktionssicherheitsanforderungen gemäß ASIL B genügen. Nach der Selektion einer Trajektorie aus den voneinander unabhängig geplanten ersten und zweiten (alternativen) Trajektorien mittels des besonders zuverlässigen (und an sich wenig komplexen) dritten Teilsystems kann die Funktion dann insgesamt ASIL D genügen. Hierdurch wird es ermöglicht, insbesondere auch FAS-Funktionen ab dem SAE-Level 3 effizient und zuverlässig abzusichern.

Das dritte Teilsystem ist eingerichtet, für jede der ersten und zweiten Trajektorien den von dem ersten Teilsystem zugeordneten Sicherheitswert mit dem von dem zweiten Teilsystem zugeordneten Sicherheitswert zu vergleichen. Dabei kann insbesondere vorgesehen sein, dass das dritte Teilsystem eingerichtet ist, diejenigen ersten oder zweiten Trajektorien für die Zwecke der weiteren Verarbeitung im Rahmen des FAS als gültige Trajektorien zu bewerten, für die der jeweilige von dem ersten Teilsystem zugeordnete Sicherheitswert sich von dem jeweiligen vom dem zweiten Teilsystem zugeordneten Sicherheitswert um weniger als eine vorbestimmte zulässige Differenz unterscheidet. Mit anderen Worten kann also eine Integritätsprüfung der geplanten Trajektorien erfolgen, indem geprüft wird, ob die beiden unabhängigen Kanäle in dem Sinne "einig" sind, dass sie eine betrachtete Trajektorie zumindest annähernd mit dem gleichen Safety Score bewerten. Ist dies der Fall, so wird die betreffende Trajektorie als gültig betrachtet und kommt als Kandidat für die reale Umsetzung im Rahmen des FAS in Frage.

Das dritte Teilsystem (d.h. der Selektor) kann ferner eingerichtet sein, die an das Steuerungssystem des FAS auszugebende (und von diesem real umzusetzende) Trajektorie aus den als gültig bewerteten Trajektorien in Abhängigkeit von den den als gültig bewerteten Trajektorien zugeordneten Sicherheitswerten auszuwählen. Dabei kann als ein Kriterium der Auswahl einer bestimmten auszugebenden Trajektorie aus mehreren gültigen Trajektorien eine Priorisierung durch das erste Teilsystem und/oder das zweite Teilsystem, insbesondere durch dasjenige Teilsystem, welches die betreffende Trajektorie geplant hat, herangezogen werden. Es kann also vorgesehen sein, dass dem Selektor von dem ersten und/oder zweiten Teilsystem zusätzlich zu den Safety Scores Informationen betreffend eine Priorisierung bereitgestellt werden.

Insgesamt kann der Selektor somit eingerichtet sein, aus mehreren geplanten Trajektorien zunächst anhand eines Vergleichs der Sicherheitsbewertungen durch das erste Teilsystem und durch das zweite Teilsystem mehrere gültige Trajektorien auswählen und in einem weiteren Schritt aus den gültigen Trajektorien in Abhängigkeit von den Sicherheitsbewertungen und/oder von einer von dem ersten Teilsystem und/oder von dem zweiten Teilsystem bereitgestellten Priorisierungsinformation eine an das Steuerungssystem des FAS auszugebende (und von diesem real umzusetzende) Trajektorie zu selektieren.

Ein zweiter Erfindungsaspekt ist ein Verfahren zum Betreiben eines Fahrerassistenzsystems eines Fahrzeugs, umfassend die Schritte:

- Erzeugen, mittels eines ersten Teilsystems, eines ersten Umfeldmodells;
- Planen, mittels des ersten Teilsystems einer oder mehrerer erster Trajektorien für das Fahrzeug in Abhängigkeit von dem ersten Umfeldmodell;
- Erzeugen, mittels eines zweiten Teilsystems, eines zweiten Umfeldmodells;
- Planen, mittels des zweiten Teilsystems einer oder mehrerer zweiter Trajektorien für das Fahrzeug in Abhängigkeit von dem zweiten Umfeldmodell;
- Durchführen, mittels des ersten Teilsystems, einer Sicherheitsbewertung sowohl der einen oder der mehreren ersten Trajektorien als auch der einen oder der mehreren zweiten Trajektorien anhand einer Metrik, wobei das Durchführen der Sicherheitsbewertung ein Zuordnen eines zahlenmäßigen Sicherheitswerts entsprechend der Metrik zu jeder der ersten und zweiten Trajektorien umfasst; und
- Durchführen, mittels des zweiten Teilsystems, einer Sicherheitsbewertung sowohl der einen oder der mehreren ersten Trajektorien als auch der einen oder der mehreren zweiten Trajektorien anhand der Metrik, wobei das Durchführen der Sicherheitsbewertung ein Zuordnen eines zahlenmäßigen Sicherheitswerts entsprechend der Metrik zu jeder der ersten und zweiten Trajektorien umfasst;
- Auswählen, mittels eines dritten Teilsystems, einer der geplanten ersten oder zweiten Trajektorien anhand von Ergebnissen der Sicherheitsbewertungen des ersten Teilsystems und des zweiten Teilsystems, wobei das Auswählen umfasst, dass das dritte Teilsystem für jede der ersten und zweiten Trajektorien den von dem ersten Teilsystem zugeordneten Sicherheitswert mit dem von dem zweiten Teilsystem zugeordneten Sicherheitswert vergleicht; und
- Ausgeben der ausgewählten Trajektorie an ein Steuerungssystem des Fahrerassistenzsystems.

Das Verfahren gemäß dem zweiten Erfindungsaspekt kann mittels eines Systems gemäß dem ersten Erfindungsaspekt ausgeführt werden. Daher können Ausführungsformen des erfindungsgemäßen Verfahrens den vorstehend und nachfolgend beschriebenen vorteilhaften Ausführungsformen des erfindungsgemäßen Systems entsprechen und umgekehrt.

Ein dritter Erfindungsaspekt ist eine Software mit Programmcode zur Durchführung des Verfahrens gemäß dem zweiten Erfindungsaspekt, wenn die Software auf einer oder mehreren softwaregesteuerten Rechenvorrichtungen abläuft. Insbesondere kann mittels der Software ein erstes, zweites und ggf. drittes Teilsystem, wie in dem vorliegenden Dokument im Zusammenhang mit dem System gemäß dem ersten Erfindungsaspekt beschrieben, realisiert werden. Dabei kann die Software auch auf mehrere separate Teilprogramme, die entsprechend der hier beschriebenen Interaktion der verschiedenen Teilsysteme miteinander wechselwirken, aufgeteilt sein. Die Software kann also gemäß einigen Ausführungsformen mehrere Teile umfassen, die jeweils auf verschiedenen, ggf. räumlich voneinander entfernten Rechenvorrichtungen (wie z.B. mehreren Prozessoren) ausgeführt werden können.

Beispielsweise kann ein System gemäß dem ersten Erfindungsaspekt eine oder mehrere Rechenvorrichtungen umfassen, auf denen eine Software gemäß dem dritten Erfindungsaspekt ausführbar ist.

Ein vierter Erfindungsaspekt ist ein computerlesbares (Speicher-)Medium, auf dem eine Software gemäß dem dritten Erfindungsaspekt gespeichert ist.

Ein fünfter Erfindungsaspekt ist ein Fahrzeug mit einem System gemäß dem ersten Erfindungsaspekt.

Die Erfindung wird nun anhand von Ausführungsbeispielen sowie unter Bezugnahme auf die beigefügten Zeichnungen näher erläutert. Dabei sind die vorstehend oder nachfolgend in der Beschreibung genannten und/oder in den Zeichnungen alleine gezeigten Merkmale und Merkmalskombinationen nicht nur in der jeweils angegebenen Kombination, sondern auch in anderen Kombinationen oder in Alleinstellung verwendbar, ohne den Rahmen der Erfindung zu verlassen.

Fig. 1    veranschaulicht beispielhaft und schematisch ein System zum Betreiben eines Fahrerassistenzsystems eines Fahrzeugs.

Fig. 2    zeigt ein schematisches Ablaufdiagramm eines Verfahrens zum Betreiben eines Fahrerassistenzsystems eines Fahrzeugs.

Fig. 3    veranschaulicht beispielhaft und schematisch relevante Größen für die Berechnung eines Sicherheitswerts einer geplanten Trajektorie.

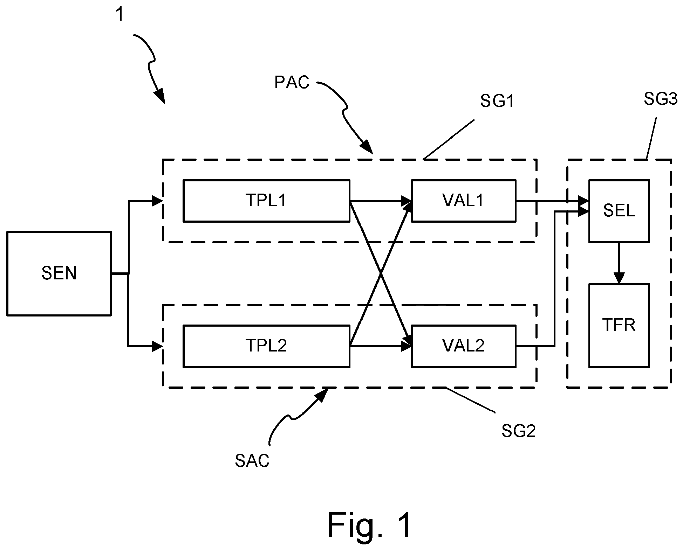

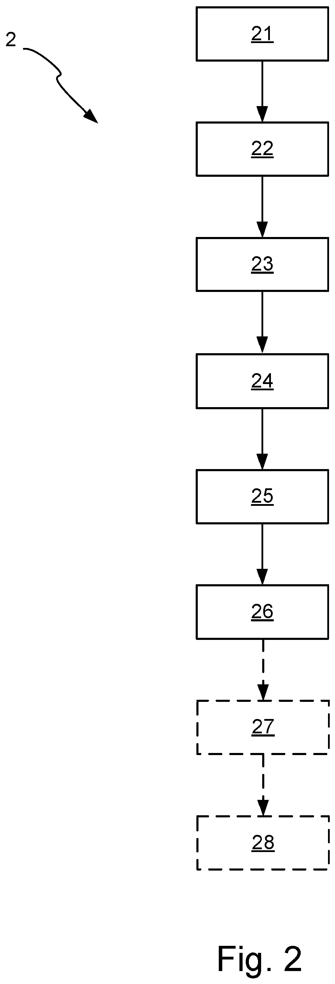

Nachfolgend wird das in Fig. 1 dargestellte Ausführungsbeispiel eines Systems 1 zum Betreiben eines FAS eines Fahrzeugs 3 erläutert, wobei sogleich auch auf die in Fig. 2 in Form eines Blockdiagramms veranschaulichten Schritte 11-13 eines entsprechenden Verfahrens 2 Bezug genommen wird.

Das System 1 umfasst ein erstes Teilsystem PAC, ein zweites Teilsystem SAC und ein drittes Teilsystem SEL.

**EP 4 380 836 B1**

Das erste Teilsystem PAC, das auch als "Primary ASIL Channel" bezeichnet werden kann, ist eingerichtet, von einer Umfeldsensorik SEN des Fahrzeugs 3 Umfeldsensordaten zu empfangen und in Abhängigkeit von den Umfeldsensordaten ein erstes Umfeldmodell zu erzeugen. Dies entspricht dem Verfahrensschritt 21 in Fig. 2: Erzeugen 21, mittels eines ersten Teilsystems PAC, eines ersten Umfeldmodells.

Weiter ist das erste Teilsystem PAC eingerichtet, eine oder mehrere erste Trajektorien für das Fahrzeug 3 in Abhängigkeit von dem ersten Umfeldmodell zu Planen. Dies entspricht dem Verfahrensschritt 22 in Fig. 2: Planen 22, mittels des ersten Teilsystems PAC einer oder mehrerer erster Trajektorien für das Fahrzeug 3 in Abhängigkeit von dem ersten Umfeldmodell.

Zum Erfüllen seiner Trajektorienplanungsaufgabe umfasst das erste Teilsystem PAC einen ersten Trajektorienplaner TPL1.

Ganz analog zu dem vorstehen mit Bezug auf das erste Teilsystem PAC Beschriebenen, ist das zweite Teilsystem SAC, welches auch als "Secondary ASIL Channel" bezeichnet werden kann, eingerichtet, von der Umfeldsensorik SEN Umfeldsensordaten zu empfangen und in Abhängigkeit von den Umfeldsensordaten ein zweites Umfeldmodell zu erzeugen. Dies entspricht dem Verfahrensschritt 23 in Fig. 2: Erzeugen 23, mittels eines zweiten Teilsystems SAC, eines zweiten Umfeldmodells.

Weiter ist das zweite Teilsystem SAC eingerichtet, mittels eines zweiten Trajektorienplaners TPL2 eine oder mehrere zweite Trajektorien für das Fahrzeug 3 in Abhängigkeit von dem zweiten Umfeldmodell zu planen, entsprechend dem Verfahrensschritt 24 in Fig. 2: Planen 24, mittels des zweiten Teilsystems SAC einer oder mehrerer zweiter Trajektorien für das Fahrzeug 3 in Abhängigkeit von dem zweiten Umfeldmodell.

Darüber hinaus sind das erste Teilsystem PAC und das zweite Teilsystem SAC jeweils eingerichtet, eine Sicherheitsbewertung sowohl der einen oder der mehreren ersten Trajektorien als auch der einen oder der mehreren zweiten Trajektorien anhand einer festgelegten Metrik durchzuführen. Dies entspricht den Verfahrensschritten 25 und 26 in Fig. 2: Durchführen 25, mittels des ersten Teilsystems PAC, einer Sicherheitsbewertung sowohl der einen oder der mehreren ersten Trajektorien als auch der einen oder der mehreren zweiten Trajektorien; und Durchführen 26, mittels des zweiten Teilsystems SAC, einer Sicherheitsbewertung sowohl der einen oder der mehreren ersten Trajektorien als auch der einen oder der mehreren zweiten Trajektorien. Das Durchführen 25, 26 der Sicherheitsbewertungen umfasst dabei jeweils ein Zuordnen eines zahlenmäßigen Sicherheitswerts entsprechend der Metrik zu jeder der ersten und zweiten Trajektorien.

Für die Validierung einer Trajektorie zieht das erste Teilsystem PAC vorzugsweise jeweils sein aktuellstes verfügbares Umfeldmodell, das auf den aktuellsten verfügbaren Umfeldsensordaten beruht heran. Insbesondere kann vorgesehen sein, dass jeweils ein letzter verfügbarer Umfeldsensordatenstand verwendet wird, der älter als ein Startzeitstempel der zu validierenden Trajektorie ist. Analoges gilt für die Validierung durch das zweite Teilsystem SAC.

Das erste Teilsystem PAC und das zweite Teilsystem SAC sind ferner jeweils eingerichtet, das Ergebnis der Sicherheitsbewertung(en) an das dritte Teilsystem SEL auszugeben.

Das dritte Teilsystem SEL, das auch als Selektor bezeichnet werden kann, ist eingerichtet, anhand der Ergebnisse der Sicherheitsbewertungen eine der geplanten ersten oder zweiten Trajektorien auszuwählen und an ein Steuerungssystem des FAS auszugeben. Bei dem vorliegenden Ausführungsbeispiel umfasst das Steuerungssystem des FAS einen Trajektorienfolgeregler TFR, an welchen der Selektor SEL die ausgewählte Trajektorie als Soll-Trajektorie für die Fahrzeugführung übergibt. Dies entspricht den Verfahrensschritten 27 und 28 in Fig. 2: Auswählen 27, mittels eines dritten Teilsystems SEL, anhand eines Ergebnisses der Sicherheitsbewertungen, einer der geplanten ersten oder zweiten Trajektorien; und Ausgeben 28 der ausgewählten Trajektorie von dem dritten Teilsystem SEL an ein Steuerungssystem TFR des FAS.

Bei dem Ausführungsbeispiel werden die Funktionen des ersten Teilsystems PAC auf einer ersten Rechenvorrichtung in Form eines ersten Steuergeräts SG1 ausgeführt, und die Funktionen des zweiten Teilsystems SAC werden auf einer separaten zweiten Rechenvorrichtung in Form eines zweiten Steuergeräts SG2 ausgeführt. Die Steuergeräte SG1, SG2 sind also insbesondere zum Erzeugen des ersten bzw. zweiten Umfeldmodells, zum Planen der ersten bzw. zweiten Trajektorie(n) sowie zum Durchführen der Sicherheitsbewertungen programmiert, sodass auf den Steuergeräten SG1, SG2 entsprechende Softwaremodule, wie ein (in Fig. 1 nicht gesondert dargestelltes) erstes bzw. zweites Umfeldmodellmodul, der bereits erwähnte erste bzw. zweite Trajektorienplaner TPL1, TPL2 sowie ein erster bzw. zweiter Validator VAL1, VAL2 ausführbar sind. Die Validatoren VAL1, VAL2 sind dabei jeweils eingerichtet, die Sicherheit der erste(n) und zweite(n) Trajektorie(n) anhand der Metrik zu bewerten.

Beispielsweise können das erste Steuergerät S1 und das zweite Steuergerät S2 mitsamt ihren jeweiligen genannten Funktionen im Rahmen des ersten Teilsystems PAC bzw. des zweiten Teilsystems SAC eine Funktionssicherheitsintegrität gemäß ASIL B aufweisen.

Die Funktionen des dritten Teilsystems SEL, d.h. insbesondere die Auswahl einer Trajektorie in Abhängigkeit von den Sicherheitsbewertungen, wird auf einem dritten Steuergerät SG3 ausgeführt, welches von dem ersten Steuergerät SG1 und dem zweiten Steuergerät SG2 separat angeordnet ist.

Beispielsweise kann das dritte Steuergerät SG2 mitsamt der darauf ausführbaren Funktion im Rahmen des dritten Teilsystems SEL eine Funktionssicherheitsintegrität gemäß ASIL D aufweisen. Insgesamt kann dann bei der selektierten Trajektorie, die der Selektor SEL an den Trajektorienfolgeregler TFR ausgibt, von einer Funktionssicherheitsintegrität gemäß ASIL D ausgegangen werden, sodass sich das vorgeschlagene System insbesondere auch für FAS ab dem SAE-Level 3 eignet.

Weitere Einzelheiten zu der Sicherheitsbewertung von Trajektorien, die das erste Teilsystem PAC und das zweite Teilsystem SAC durchführen, und der Auswahl einer Trajektorie durch den Selektor SEL sollen im Folgenden anhand von Beispielen erläutert werden.

Es kann z.B. vorgesehen sein, dass der erste Trajektorienplaner TPL1 des ersten Teilsystems PAC für einen bestimmten zeitlichen Planungshorizont mehrere, wie z.B. mehr als 15, alternative Trajektorien berechnet, während der zweite Trajektorienplaner TPL2 des zweiten Teilsystems SAC für denselben Zeitraum nur eine einzige Trajektorie für ein Minimum Risk Maneuver (MRM) berechnet. Nichtsdestotrotz muss der zweite Validator VAL2 zusätzlich zu der MRM-Trajektorie auch alle vom ersten Trajektorienplaner TPL1 berechneten Trajektorien validieren, und der erste Validator VAL1 muss im Gegenzug zusätzlich zu den mehreren durch den ersten Trajektorienplaner TPL1 geplanten Trajektorien auch die MRM-Trajektorie validiere.

Da das zweite Teilsystem SAC bei diesem Beispiel nur eine MRM-Trajektorie berechnet, das erste Teilsystem hingegen mehrere "vollwertige" (Komfort-)Trajektorien plant, ist offensichtlich, dass die Validierung kein Identitätsabgleich zwischen den mehreren berechneten Trajektorien des ersten Teilsystems PAC und der MRM-Trajektorie des zweiten Teilsystems SAC sein kann. Vielmehr bewerten beide Kanäle, PAC und SAC, die Sicherheit ihrer eigenen und der vom jeweils anderen Kanal berechneten Trajektorien im Hinblick auf mögliche Kollisionen des Fahrzeugs 3 mit Objekten 4 im Fahrzeugumfeld anhand einer definierten Metrik. Dabei wird für jede Trajektorie ein Safety Score berechnet. Daraus ergeben sich zwei Safety Scores für jede Trajektorie (ein Safety Score von jedem Validator VAL1 und VAL2).

Der Safety Score gibt an, wie wahrscheinlich die betrachtete Trajektorie kollisionsfrei oder zumindest frei von Kollisionen ab einer bestimmten Schadensschwere ist. Dabei wird zwischen möglichen Kollisionen mit unterschiedlichen zu erwartenden Schadensschweren, unterschieden. Beispielsweise fallen gemäß einer Ausführungsform Kollisionen, bei welchen die Geschwindigkeitsdifferenz zwischen dem Ego-Fahrzeug 3 und einem Kollisionsobjekt 4 geringer als 60 km/h ist, in die Kategorie S0 oder S1; die Schadensschwere S2 wird angenommen für eine Geschwindigkeitsdifferenz im Bereich von 60 km/h und 70 km/h; und bei Geschwindigkeitsdifferenzen, die größer als 70 km/h sind, wird eine Schadensschwere S3 oder höher (Schadensschwere "S3+") angenommen.

Der erste Validator VAL1 und der zweite Validator VAL2 sind eingerichtet, den jeweiligen Safety Score in Abhängigkeit von einer Time-to-react TTR zu bestimmen, welche angibt, wie viel Zeit beim Fahren der jeweiligen Trajektorie unter Berücksichtigung eines jeweiligen aktuellen, vom PAC bzw. SAC erzeugten Umfeldmodells verbleiben würde, um Maßnahmen zur Vermeidung einer Kollision einer definierten Schadensschwere mit einem Objekt 4 im Fahrzeugumfeld zu ergreifen. Dabei können bestimmte, auf eine jeweilige Schadensklasse, wie z.B. S1, S2, S3+, bezogene TTRs berücksichtigt werden. So kann z.B. eine Zeitangabe $TTR_{Si}$ (mit i = 1, 2, 3+) eine Aussage darüber treffen, wie viel Zeit für Gegenmaßnahmen verbleibt, um eine Kollision mit der Schadensschwere $S_i$ (z.B. durch eine Bremsung) zu verhindern.

Bei der Berechnung des Sicherheitswerts kann ferner eine "Minimum time to react" $MTTR_{Si}$ eine Rolle spielen, d.h. ein Schwellwert, der eine gerade noch akzeptable Mindestzeit angibt, die für Maßnahmen zur Verhinderung einer Kollision mit der potenziellen Schadensschwere $S_i$ immer verbleiben muss.

Beispielsweise wird gemäß einer Ausführungsform der (Gesamt-)Sicherheitswert *Score* wie folgt aus mehreren Teil-Sicherheitswerten $Score_{Si}$ (z.B. mit i = 1, 2, 3+) berechnet, die sich jeweils auf eine potenzielle Schadensschwere $S_i$ beziehen:

$$Score = \sqrt{Score_{S1}^2 + Score_{S2}^2 + Score_{S3+}^2}$$

Dabei können die Teil-Sicherheitswerte $Score_{Si}$ jeweils in Abhängigkeit von der der betrachteten Traktorie zugeordneten $TTR_{Si}$ und einer jeweiligen $MTTR_{Si}$ berechnet werden als

$$Score_{Si} = a_{i1}e^{(MTTR\_Si - TTR\_Si)} * a_{i2}e^{-\lambda * TTR\_Si}.$$

Die Koeffizienten $a_{i1}$, $a_{i2}$ und $\lambda$ können für jeden Validator VAL1, VAL2 angepasst werden und können dabei insbesondere als Freiheitsgrad genutzt werden, um die Berechnung des Safety Scores in beiden Validatoren VAL1, VAL2 aneinander anzugleichen.

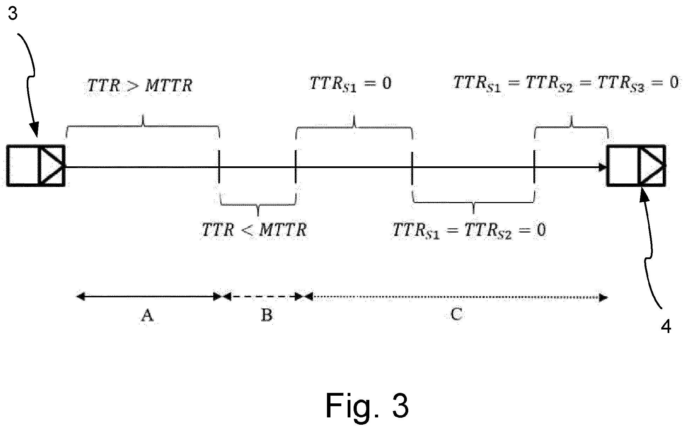

Die Fig. 3 zeigt beispielhaft und schematisch ein Szenario, bei welchem dem Ego-Fahrzeug 3 ein anderes Fahrzeug 4 (als potenzielles Kollisionsobjekt) vorausfährt. Dabei kann der jeweilige Safety Score einer Trajektorie unter Verwendung der Größen $TTR_{Si}$ und $MTTR_{Si}$ letztendlich in Abhängigkeit von der Geschwindigkeit des Ego-Fahrzeugs 3, der Geschwindigkeit des vor dem Ego-Fahrzeug 3 fahrenden Fahrzeugs 4 und dem Abstand zwischen dem Ego-Fahrzeug 3 und dem vor dem Ego-Fahrzeug 3 fahrenden Fahrzeug 4 bestimmt werden. Beispielsweise können die $TTR_{Si}$ auf der Grundlage dieser physikalischen Parameter und einer Definition der unterschiedlichen Schadensschweren unter Annahme eines Worst-Case-Szenario bestimmt werden, bei welchem z.B. angenommen wird, dass das vorausfahrendes Fahrzeug 4 abrupt mit einer negativen Beschleunigung von 10 ms$^{-2}$ bremst, worauf das Ego-Fahrzeug 3 mit einer Bremsung bei (maximal) 6 ms$^{-2}$ reagieren kann, da dies die maximal umsetzbare Verzögerung im Falle eines Ausfalls der Hauptenergieversorgung ist.

Wenn die beiden Fahrzeuge 3, 4 beispielsweise in einem Abstand von 65 m hintereinander auf der gleichen Spur jeweils mit einer Geschwindigkeit von 130 km/h fahren, kann dies als sicher eingestuft werden. Ein derartiges Szenario kann z.B. bei der Sicherheitsbewertung als Referenz für eine sichere Situation zu Grunde gelegt werden. Für den Fall, dass hiervor ausgehend das im vorstehenden Absatz beschriebene Worst-Case-Szenario eintritt, können sich z.B. die folgenden nach der zu erwartenden Schadensschwere bei einer Kollision aufgeschlüsselten TTR bzw. MTTR ergeben:

| Schadenssschwere | TTR [s] | MTTR [s] |
|---|---|---|
| S1 | 0,67 | 0,6 |
| S2 | 1,35 | 1,2 |
| S3+ | 2,40 | 2,2 |

Bei dem generischen Beispiel einer Folgefahrt gemäß Fig. 3A gibt der mit "A" markierte Bereich an, welcher Abstandsbereich (bei bestimmten Geschwindigkeitsverhältnissen) ebenfalls noch als sicher angesehen werden kann, da in diesem Bereich die TRR größer als die MTRR ist und somit auch in dem angenommenen Worts-Case-Fall noch genügend Zeit für Gegenmaßnahmen des Ego-Fahrzeugs 3 verbleiben würde, um eine Kollision ganz zu verhindern. Demgegenüber wird der mit "B" markierte Abstandsbereich bereits als tendenziell unsicher zu bewerten sein, da hier die TRR geringer als die MTRR ist und es somit bei einer plötzlichen starken Bremsung des vorausfahrenden Fahrzeugs 4 zu einer Kollision kommen kann. Der mit "C" markierte Abstandsbereich ist als unsicher zu bewerten, da hier eine Kollision im Worts-Case-Fall (plötzliche starke Verzögerung des Vorderfahrzeugs 4) bereits als unvermeidbar gelten muss. Dieser Bereich kann jedoch noch nach der zu erwartenden Schadensschwere der Kollision genauer aufgeschlüsselt werden: In einem ersten Abschnitt des unsicheren Bereichs C ist lediglich die $TTR_{S1} = 0$. Das bedeutet, dass ggf. eine Kollision mit der Schadenssschwere S1 nicht mehr vermeidbar ist, eine Kollision mit der größeren Schadenssschwere S2 hingegen schon. Ein daran anschließender Abschnitt zeichnet sich dadurch aus, dass nun auch $TTR_{S2} = 0$ gilt, dass also eine Kollision mit der Schadensschwere S2 ggf. nicht mehr vermeidbar ist. In einem weiteren Abschnitt, der sich durch einen sehr geringen Abstand zwischen dem Ego-Fahrzeug 3 und dem vorausfahrenden Fahrzeug 4 auszeichnet, gilt sogar $TTR_{S3} = 0$, sodass eine Trajektorie, die das Ego-Fahrzeug 3 in diesen Abschnitt des Bereichs "C" hineinführt, eine vergleichsweise schlechte Sicherheitsbewertung erhalten wird.

Für die Berechnung der Safety Scores berücksichtigen die Validatoren VAL1, VAL2 Objekte und Fahrzeuge 4 in der Ego-Spur. Objekte außerhalb der Fahrspur werden gemäß einer Ausführungsform ignoriert. Gemäß einer Ausführungsform wird für die Berechnung des Safety Scores auch keine Vorhersage darüber getroffen, ob ein Fahrzeug die Fahrspur wechselt oder nicht. Vielmehr wird bei dieser Ausführungsform angenommen, dass alle Fahrzeuge ihre Fahrspur und ihre Geschwindigkeit beibehalten. Fahrzeuge, die auf die Ego-Lane wechseln, werden erst berücksichtigt, wenn sie die Fahrbahnmarkierung überfahren.

Bei denjenigen Objekten und Fahrzeugen 4, die sich jenseits des Bereichs befinden, in dem die Sensoren den Fahrspurverlauf verlässlich erkennen können, geht das System 1 gemäß einer Ausführungsform davon aus, dass diese sich in der Ego-Spur befinden (Worst-Case-Annahme). Beispielsweise kann eine Distanz von 60 m als Schwellenwert definiert werden, wobei die pauschale Annahme, dass sich das Objekt oder Fahrzeug 4 in der Ego-Spur befindet, ab dieser Distanz getroffen wird.

Nachfolgend soll die Bedeutung der Zeitangaben $TTR_{Si}$ und der $MMR_{Si}$ zum besseren Verständnis an zwei weiteren Beispielszenarien verdeutlicht werden.

In einer ersten Beispielsituation fährt das Ego-Fahrzeug 3 auf der Autobahn und nähert sich dem Ende eines Staus. Eine Trajektorie wird entsprechend geplant und bringt das Fahrzeug 3 mit einer kontinuierlichen Verzögerung von 4 ms$^{-2}$ zum sicheren Stillstand. Wenn keine Fehler in der Trajektorienplanung auftreten und wenn kein anderes Fahrzeug in die Fahrspur des Ego-Fahrzeugs 3 einschert, sind dabei die $TTC_{Si}$ zu jedem Zeitpunkt unendlich. Bei der Annäherung an das Stauende nehmen alle $TTR_{Si}$ bis zum Abbremsen des Fahrzeugs 3 ab. Die $MTTR_{Si}$ sind größer als die entsprechenden $TTR_{Si}$. Ab dem Punkt, an dem die Bremsen betätigt werden, steigen alle $TTR_{Si}$ wieder an. Wenn das Fahrzeug 3 zum Stillstand kommt, sind alle $TTR_{Si}$ unendlich.

In einer zweiten Beispielsituation folgt das Ego-Fahrzeug 3 einem vorausfahrenden Fahrzeug 4, das plötzlich mit 1 ms$^{-2}$ langsam abbremst. Die Trajektorie des Ego-Fahrzeugs 3 wird nicht angepasst und die Bremsen werden nicht betätigt. Anfänglich sind alle $TTR_{Si}$ größer als die entsprechenden $MTTR_{Si}$. Wenn das vorausfahrende Fahrzeug 4 langsamer wird und sich das Ego-Fahrzeug 3 nähert, konvergiert zunächst $TTR_{S0}$ und anschließend auch $TTR_{S1}$ gegen 0. Die TTR für höhere Schweregrade kann wegen der geringen Differenzgeschwindigkeit beim Aufprall unendlich bleiben. Während der Zeit, in der das vorausfahrende Fahrzeug 4 und das Ego-Fahrzeug 3 mit der gleichen Geschwindigkeit fahren, sind die $TTC_{Si}$ unendlich. Mit dem Abbremsen des vorausfahrenden Fahrzeugs 4 beginnen die Times-to-colison $TTC_{Si}$ (für i = 0, 1) zu sinken und konvergieren im Moment des Aufpralls gegen 0. Die $TTC_{S2}$ und $TTC_{S3}$ können unendlich bleiben, bedingt durch die geringe Differenzgeschwindigkeit beim Aufprall.

Für jede geplante Trajektorie vergleicht der Selektor SEL die beiden zugehörigen Safety Scores (d.h. den von dem ersten Validator VAL1 vergebene Safety Score und den von dem zweiten Validator VAL2 vergebene Safety Score) miteinander. Es kann z.B. vorgesehen sein, dass der Selektor SEL zyklisch (d.h. z.B. einmal alle 40 ms) die Trajektorien beider Kanäle, PAC und SAC, und die jeweiligen Sicherheitsbewertungen empfängt.

Beispielsweise werden die Ausgaben des ersten Validators 1 und des zweiten Validators 2 zum Zwecke der Weiterverarbeitung durch den Selektor SEL in einer Tabelle zusammengeführt. Eine beispielhafte Tabelle ist nachstehend eingeblendet.

| ID | Quelle | PAC Score | SAC Score | Typ | PAC Prio |
|------|----------|-----------|-----------|---------|----------|
| #1 | PAC | 10 | 20 | comfort | 1 |
| #2 | PAC | 110 | 80 | MRM | 8 |
| #3 | PAC | 2000 | 20 | comfort | 12 |
| #4 | SAC | 30 | 100 | MRM | - |
| #5 | PAC | 90 | 80 | comfort | 3 |
| #6 | Fallback | 1000 | 950 | MRM | - |
| ... | ... | ... | ... | ... | ... |

Wie gezeigt, kann die Tabelle für jede Trajektorie aus einer Mehrzahl von Trajektorien z.B. die folgenden Angaben enthalten: Eine Trajektorien-ID; eine Angabe der Quelle, d.h. durch welches Teilsystem die Trajektorie geplant wurde (insbesondere PAC oder SAC oder ggf. ein weiterer, unabhängiger Fallback-Kanal); den durch das erste Teilsystem ermittelten Safety Score (PAC Score); den durch das zweite Teilsystem ermittelten Safety Score (SAC Score); einen Trajektorien-Typ (MRM oder comfort); und eine vom PAC zugewiesene Priorität (für durch den PAC geplante Trajektorien).

Der Selektor SEL ist eingerichtet, nur diejenigen ersten oder zweiten Trajektorien für die Zwecke der weiteren Verarbeitung als gültige Trajektorien zu bewerten, für die der jeweilige von dem ersten Teilsystem PAC zugeordneten Sicherheitswert sich von dem jeweiligen von dem zweiten Teilsystem SAC zugeordneten Sicherheitswert um weniger als eine vorbestimmte zulässige Differenz unterscheidet. Mit anderen Worten: Die beiden Safety Scores, die zu einer bestimmten Trajektorie gehören, müssen in einem definierten Rahmen nah beieinander liegen, damit die Trajektorie nicht als fehlerhaft markiert und aussortiert wird. Wenn nämlich die Differenz zwischen den beiden Safety-Scores über einem bestimmten Schwellenwert liegt, wird davon ausgegangen werden, dass in mindestens einem der Kanäle ein Fehler vorliegt. Da der Selektor aber nicht in der Lage ist, zu erkennen, welcher Kanal von dem Fehler betroffen ist, wird die Trajektorie in diesem Fall eliminiert (d.h. für die weitere Verarbeitung nicht als gültig betrachtet), sodass sie im Ergebnis von dem Fahrzeug nicht gefahren wird.

Bezogen auf das Beispiel der oben eingeblendeten Tabelle können z.B. die Trajektorien mit den IDs #3 und #4 aus der Liste der gültigen Trajektorien eliminiert werden, da hier der PAC Score deutlich von dem SAC Score abweicht. An diesem Beispiel wird deutlich, dass bei diesem Schritt des Selektors SEL das Ziel nicht etwa ist, aus allen geplanten Trajektorien die absolut sicherste Trajektorie zu finden, sondern diejenigen Trajektorien aus der Tabelle zu entfernen, deren von SAC und PAC berechnete Safety Scores nicht in definierter Weise nah bei einander liegen.

Nach dem Eliminieren der ungültigen Trajektorien muss der Selektor SEL eine der Trajektorien verbleibenden, gültigen Trajektorien auswählen, die an den Trajektorienfolgeregler TFR ausgegeben wird. Dabei ist der Selektor SEL eingerichtet, die auszugebende Trajektorie aus den als gültig bewerteten Trajektorien in Abhängigkeit von den den als gültig bewerteten Trajektorien zugeordneten Safety Scores auszuwählen. Hierzu können bestimmte Safety-Score-Schwellwerte definiert sein, wobei jede gültige Trajektorie je nach ihren Safety-Scores gemäß den Safety-Score-Schwellwerten in eine bestimmte Kategorie eingeordnet wird.

Beispielsweise kann vorgesehen sein, dass der Selektor SEL die auszugebende Trajektorie aus denjenigen Trajektorien auswählt, die in die höchste durch die Safety-Score-Schwellwerte festgelegte Sicherheitskategorie fallen. Bei normaler Funktion des Systems wird es nämlich z.B. typischerweise mehrere alternative Trajektorien geben, von denen erwartet werden kann, dass sie kollisionsfrei sind und die dementsprechend von beiden Validatoren VAL1, VAL2 mit demselben oder einem hinreichend ähnlichen, hohen Safety Score bewertet werden.

Falls eine Trajektorie der höchsten Sicherheitskategorie nicht vorhanden ist, wählt der Selektor SEL die auszugebende Trajektorie aus den gültigen Trajektorien der nächst niedrigeren Sicherheitskategorie aus usw. Wenn der Selektor SEL nach einer vorbestimmten Zeitspanne keine fahrbare Trajektorie, die von dem ersten Teilsystem PAC oder dem zweiten Teilsystem SAC geplant wurde, findet, wird z.B. auf eine von einem unabhängigen Fallback-Kanal bereitgestellte MRM-Trajektorie zurückgegriffen.

Es kann dabei ferner vorgesehen sein, dass der Selektor SEL seine Auswahl unter den Trajektorien Innerhalb einer jeweiligen Kategorie entsprechend einer Priorisierung trifft, die insbesondere von dem ersten Teilsystem PAC erstellt werden kann. Dadurch ist das erste Teilsystem PAC in der Lage, seine berechneten ersten Trajektorien zusätzlich nach Komfort zu priorisieren. Diese Rangfolge wird vom Selektor SEL berücksichtigt, indem er innerhalb der höchsten verfügbaren Sicherheitskategorie die Trajektorie mit der höchsten Priorität (d.h. z.B. mit dem kleinsten ganzzahligen Prioritätswert) auswählt. Bezogen auf die vorstehen eingeblendete Tabelle bedeutet das z.B., dass, wenn die Trajektorien #2 und #5 des PAC eide als gültig bewertet und derselben Sicherheitskategorie zugeordnet werden, die Wahl des Selektors SEL auf die durch den PAC höher priorisierte Trajektorie #5 fällt.

**Patentansprüche**

1. System (1) zum Betreiben eines Fahrerassistenzsystems eines Fahrzeugs (3), wobei das System (1) umfasst:

   - Ein erstes Teilsystem (PAC), das eingerichtet ist zum:

     • Erzeugen eines ersten Umfeldmodells; und
     • Planen einer oder mehrerer erster Trajektorien für das Fahrzeug (3) in Abhängigkeit von dem ersten Umfeldmodell; und

   - ein zweites Teilsystem (SAC), das eingerichtet ist zum:

     • Erzeugen eines zweiten Umfeldmodells; und
     • Planen einer oder mehrerer zweiter Trajektorien für das Fahrzeug (3) in Abhängigkeit von dem zweiten Umfeldmodell;

   wobei das erste Teilsystem (PAC) und das zweite Teilsystem (SAC) jeweils eingerichtet sind, eine Sicherheitsbewertung sowohl der einen oder der mehreren ersten Trajektorien als auch der einen oder der mehreren zweiten Trajektorien anhand einer Metrik durchzuführen,
   wobei das Durchführen der Sicherheitsbewertung ein Zuordnen eines zahlenmäßigen Sicherheitswerts entsprechend der Metrik zu jeder der ersten und zweiten Trajektorien umfasst,
   wobei das System (1) ferner ein drittes Teilsystem (SEL) umfasst, wobei das erste Teilsystem (PAC) und das zweite Teilsystem (SAC) jeweils eingerichtet sind, ein Ergebnis der Sicherheitsbewertung an das dritte Teilsystem (SEL) auszugeben, und wobei das dritte Teilsystem (SEL) eingerichtet ist, anhand der Ergebnisse der Sicherheitsbewertungen eine der geplanten ersten oder zweiten Trajektorien auszuwählen und an ein Steuerungssystem (TFR) des Fahrerassistenzsystems auszugeben,
   **dadurch gekennzeichnet, dass**
   das dritte Teilsystem (SEL) eingerichtet ist, für jede der ersten und zweiten Trajektorien den von dem ersten Teilsystem (PAC) zugeordneten Sicherheitswert mit dem von dem zweiten Teilsystem (SAC) zugeordneten Sicherheitswert zu vergleichen.

2. System (1) nach Anspruch 1, **dadurch gekennzeichnet, dass** das System (1) eine oder mehrere erste Rechenvorrichtungen (SG1) und eine oder mehrere von der oder den ersten Rechenvorrichtungen (SG1) verschiedene zweite Rechenvorrichtungen (SG2) umfasst, wobei das erste Teilsystem (PAC) eingerichtet ist, das Erzeugen des ersten Umfeldmodells, das Planen des oder der ersten Trajektorien und das Durchführen der Sicherheitsbewertung mittels der einen oder der mehreren ersten Rechenvorrichtungen (SG1) auszuführen und wobei das zweite Teilsystem (SAC) eingerichtet ist, das Erzeugen des zweiten Umfeldmodells, das Planen des oder der zweiten Trajektorien und das Durchführen der Sicherheitsbewertung mittels der einen oder der mehreren zweiten Rechenvorrichtungen (SG2) auszuführen.

3. System (1) nach einem der vorhergehenden Ansprüche, **dadurch gekennzeichnet, dass** das dritte Teilsystem (SEL) eingerichtet ist, diejenigen ersten oder zweiten Trajektorien für die Zwecke der weiteren Verarbeitung als

## EP 4 380 836 B1

gültige Trajektorien zu bewerten, für die der jeweilige von dem ersten Teilsystem (PAC) zugeordneten Sicherheitswert sich von dem jeweiligen von dem zweiten Teilsystem (SAC) zugeordneten Sicherheitswert um weniger als eine vorbestimmte zulässige Differenz unterscheidet.

4. System (1) nach Anspruch 3, **dadurch gekennzeichnet, dass** das dritte Teilsystem (SEL) eingerichtet ist, die an das Steuerungssystem (TFR) des Fahrerassistenzsystem auszugebende Trajektorie aus den als gültig bewerteten Trajektorien in Abhängigkeit von den den als gültig bewerteten Trajektorien zugeordneten Sicherheitswerten auszuwählen.

5. System (1) nach einem der vorhergehenden Ansprüche, **dadurch gekennzeichnet, dass** das erste Teilsystem (PAC) und das zweite Teilsystem (SAC) jeweils eingerichtet sind, den jeweiligen Sicherheitswert in Abhängigkeit von einer Zeitangabe zu bestimmen, welche angibt, wie viel Zeit beim Fahren der jeweiligen Trajektorie verbleiben würde, um Maßnahmen zur Vermeidung einer Kollision einer definierten potenziellen Schadensschwere mit einem Objekt (4) im Fahrzeugumfeld durchzuführen.

6. System (1) nach einem der vorhergehenden Ansprüche, **dadurch gekennzeichnet, dass** das erste Teilsystem (PAC) und das zweite Teilsystem (SAC) jeweils eingerichtet sind, den jeweiligen Sicherheitswert in Abhängigkeit von einer Geschwindigkeit des Fahrzeugs (3), einer Geschwindigkeit eines vor dem Fahrzeug (3) fahrenden Fahrzeugs (4) und einem Abstand zwischen dem Fahrzeug (3) und dem vor dem Fahrzeug (3) fahrenden Fahrzeug (4) zu bestimmen.

7. Verfahren (2) zum Betreiben eines Fahrerassistenzsystems eines Fahrzeugs (3), umfassend die Schritte:

   - Erzeugen (21), mittels eines ersten Teilsystems (PAC), eines ersten Umfeldmodells;
   - Planen (22), mittels des ersten Teilsystems (PAC), einer oder mehrerer erster Trajektorien für das Fahrzeug (3) in Abhängigkeit von dem ersten Umfeldmodell;
   - Erzeugen (23), mittels eines zweiten Teilsystems (SAC), eines zweiten Umfeldmodells;
   - Planen (24), mittels des zweiten Teilsystems (SAC), einer oder mehrerer zweiter Trajektorien für das Fahrzeug (3) in Abhängigkeit von dem zweiten Umfeldmodell;
   - Durchführen (25), mittels des ersten Teilsystems (PAC), einer Sicherheitsbewertung sowohl der einen oder der mehreren ersten Trajektorien als auch der einen oder der mehreren zweiten Trajektorien anhand einer Metrik, wobei das Durchführen (25) der Sicherheitsbewertung ein Zuordnen eines zahlenmäßigen Sicherheitswerts entsprechend der Metrik zu jeder der ersten und zweiten Trajektorien umfasst;
   - Durchführen (26), mittels des zweiten Teilsystems (SAC), einer Sicherheitsbewertung sowohl der einen oder der mehreren ersten Trajektorien als auch der einen oder der mehreren zweiten Trajektorien anhand der Metrik, wobei das Durchführen (26) der Sicherheitsbewertung ein Zuordnen eines zahlenmäßigen Sicherheitswerts entsprechend der Metrik zu jeder der ersten und zweiten Trajektorien umfasst;
   - Auswählen (27), mittels eines dritten Teilsystems (SEL), einer der geplanten ersten oder zweiten Trajektorien anhand von Ergebnissen der Sicherheitsbewertungen des ersten Teilsystems (PAC) und des zweiten Teilsystems (SAC); und
   - Ausgeben (28) der ausgewählten Trajektorie an ein Steuerungssystem (TFR) des Fahrerassistenzsystems;

   **dadurch gekennzeichnet, dass**

   das Auswählen (27) der Trajektorie umfasst, dass das dritte Teilsystem (SEL) für jede der ersten und zweiten Trajektorien den von dem ersten Teilsystem (PAC) zugeordneten Sicherheitswert mit dem von dem zweiten Teilsystem (SAC) zugeordneten Sicherheitswert vergleicht.

8. Software mit Programmcode zur Durchführung des Verfahrens (2) nach Anspruch 7, wenn die Software auf einer oder mehreren softwaregesteuerten Rechenvorrichtungen abläuft.

### Claims

1. System (1) for operating a driver assistance system of a vehicle (3), wherein the system (1) comprises:

   • A first subsystem (PAC) which is configured for:

      • Generating a first environment model; and

• Planning one or more first trajectories for the vehicle (3) in dependence on the first environment model; and

• a second subsystem (SAC) which is configured for:

• Generating a second environment model; and
• Planning one or more second trajectories for the vehicle (3) in dependence on the second environment model;
wherein the first subsystem (PAC) and the second subsystem (SAC) are each configured to perform a safety assessment of both the one or more first trajectories and the one or more second trajectories on the basis of a metric,
wherein performing the safety assessment comprises assigning a numerical safety value according to the metric to each of the first and second trajectories,
wherein the system (1) further comprises a third subsystem (SEL), wherein the first subsystem (PAC) and the second subsystem (SAC) are each configured to output a result of the safety assessment to the third subsystem (SEL), and wherein the third subsystem (SEL) is configured to select one of the planned first or second trajectories on the basis of the results of the safety assessments and to output it to a control system (TFR) of the driver assistance system,
**characterized in that**
the third subsystem (SEL) is configured to compare, for each of the first and second trajectories, the safety value assigned by the first subsystem (PAC) with the safety value assigned by the second subsystem (SAC).

2. System (1) according to claim 1, **characterized in that** the system (1) comprises one or more first computing devices (SG1) and one or more second computing devices (SG2) different from the first computing device or devices (SG1), wherein the first subsystem (PAC) is configured to execute the generating of the first environment model, the planning of the first trajectory or trajectories and the performing of the safety assessment by means of the one or more first computing devices (SG1) and wherein the second subsystem (SAC) is configured to execute the generating of the second environment model, the planning of the second trajectory or trajectories and the performing of the safety assessment by means of the one or more second computing devices (SG2).

3. System (1) according to one of the preceding claims, **characterized in that** the third subsystem (SEL) is configured to evaluate those first or second trajectories for the purposes of further processing as valid trajectories for which the respective safety value assigned by the first subsystem (PAC) differs from the respective safety value assigned by the second subsystem (SAC) by less than a predetermined permissible difference.

4. System (1) according to claim 3, **characterized in that** the third subsystem (SEL) is configured to select the trajectory to be output to the control system (TFR) of the driver assistance system from the trajectories evaluated as valid in dependence on the safety values assigned to the trajectories evaluated as valid.

5. System (1) according to one of the preceding claims, **characterized in that** the first subsystem (PAC) and the second subsystem (SAC) are each configured to determine the respective safety value in dependence on a time indication which indicates how much time would remain when driving the respective trajectory to perform measures for avoiding a collision of a defined potential damage severity with an object (4) in the vehicle environment.

6. System (1) according to one of the preceding claims, **characterized in that** the first subsystem (PAC) and the second subsystem (SAC) are each configured to determine the respective safety value in dependence on a speed of the vehicle (3), a speed of a vehicle (4) driving in front of the vehicle (3) and a distance between the vehicle (3) and the vehicle (4) driving in front of the vehicle (3).

7. Method (2) for operating a driver assistance system of a vehicle (3), comprising the steps:

• Generating (21), by means of a first subsystem (PAC), a first environment model;
• Planning (22), by means of the first subsystem (PAC), one or more first trajectories for the vehicle (3) in dependence on the first environment model;
• Generating (23), by means of a second subsystem (SAC), a second environment model;
• Planning (24), by means of the second subsystem (SAC), one or more second trajectories for the vehicle (3) in dependence on the second environment model;
• Performing (25), by means of the first subsystem (PAC), a safety assessment of both the one or more first trajectories and the one or more second trajectories on the basis of a metric, wherein the performing (25) of the

14

safety assessment comprises assigning a numerical safety value according to the metric to each of the first and second trajectories;

• Performing (26), by means of the second subsystem (SAC), a safety assessment of both the one or more first trajectories and the one or more second trajectories on the basis of the metric, wherein the performing (26) of the safety assessment comprises assigning a numerical safety value according to the metric to each of the first and second trajectories;

• Selecting (27), by means of a third subsystem (SEL), one of the planned first or second trajectories on the basis of results of the safety assessments of the first subsystem (PAC) and the second subsystem (SAC); and

• Outputting (28) the selected trajectory to a control system (TFR) of the driver assistance system;

**characterized in that**

the selecting (27) of the trajectory comprises that the third subsystem (SEL) compares, for each of the first and second trajectories, the safety value assigned by the first subsystem (PAC) with the safety value assigned by the second subsystem (SAC).

8. Software with program code for performing the method (2) according to claim 7, when the software runs on one or more software-controlled computing devices.

**Revendications**

1. Système (1) pour faire fonctionner un système d'assistance au conducteur d'un véhicule (3), le système (1) comprenant :

    • Un premier sous-système (PAC) qui est configuré pour :

        • Générer un premier modèle d'environnement ; et
        • Planifier une ou plusieurs premières trajectoires pour le véhicule (3) en fonction du premier modèle d'environnement ; et

    • un deuxième sous-système (SAC) qui est configuré pour :

        • Générer un deuxième modèle d'environnement ; et
        • Planifier une ou plusieurs deuxièmes trajectoires pour le véhicule (3) en fonction du deuxième modèle d'environnement ;
        dans lequel le premier sous-système (PAC) et le deuxième sous-système (SAC) sont chacun configurés pour effectuer une évaluation de sécurité à la fois de la ou des premières trajectoires et de la ou des deuxièmes trajectoires sur la base d'une métrique,
        dans lequel l'exécution de l'évaluation de sécurité comprend l'attribution d'une valeur de sécurité numérique selon la métrique à chacune des premières et deuxièmes trajectoires,
        dans lequel le système (1) comprend en outre un troisième sous-système (SEL), dans lequel le premier sous-système (PAC) et le deuxième sous-système (SAC) sont chacun configurés pour délivrer un résultat de l'évaluation de sécurité au troisième sous-système (SEL), et dans lequel le troisième sous-système (SEL) est configuré pour sélectionner l'une des premières ou deuxièmes trajectoires planifiées sur la base des résultats des évaluations de sécurité et pour la délivrer à un système de commande (TFR) du système d'assistance au conducteur,
        **caractérisé en ce que**
        le troisième sous-système (SEL) est configuré pour comparer, pour chacune des premières et deuxièmes trajectoires, la valeur de sécurité attribuée par le premier sous-système (PAC) avec la valeur de sécurité attribuée par le deuxième sous-système (SAC).

2. Système (1) selon la revendication 1, **caractérisé en ce que** le système (1) comprend un ou plusieurs premiers dispositifs de calcul (SG1) et un ou plusieurs deuxièmes dispositifs de calcul (SG2) différents du ou des premiers dispositifs de calcul (SG1), dans lequel le premier sous-système (PAC) est configuré pour exécuter la génération du premier modèle d'environnement, la planification de la ou des premières trajectoires et l'exécution de l'évaluation de sécurité au moyen du ou des premiers dispositifs de calcul (SG1) et dans lequel le deuxième sous-système (SAC) est configuré pour exécuter la génération du deuxième modèle d'environnement, la planification de la ou des deuxièmes trajectoires et l'exécution de l'évaluation de sécurité au moyen du ou des deuxièmes dispositifs de calcul (SG2).

3. Système (1) selon l'une des revendications précédentes, **caractérisé en ce que** le troisième sous-système (SEL) est configuré pour évaluer comme trajectoires valides aux fins du traitement ultérieur celles des premières ou deuxièmes trajectoires pour lesquelles la valeur de sécurité respective attribuée par le premier sous-système (PAC) diffère de la valeur de sécurité respective attribuée par le deuxième sous-système (SAC) de moins d'une différence admissible prédéterminée.

4. Système (1) selon la revendication 3, **caractérisé en ce que** le troisième sous-système (SEL) est configuré pour sélectionner la trajectoire à délivrer au système de commande (TFR) du système d'assistance au conducteur parmi les trajectoires évaluées comme valides en fonction des valeurs de sécurité attribuées aux trajectoires évaluées comme valides.

5. Système (1) selon l'une des revendications précédentes, **caractérisé en ce que** le premier sous-système (PAC) et le deuxième sous-système (SAC) sont chacun configurés pour déterminer la valeur de sécurité respective en fonction d'une indication de temps qui indique combien de temps resterait lors de la conduite de la trajectoire respective pour effectuer des mesures pour éviter une collision d'une gravité de dommage potentielle définie avec un objet (4) dans l'environnement du véhicule.

6. Système (1) selon l'une des revendications précédentes, **caractérisé en ce que** le premier sous-système (PAC) et le deuxième sous-système (SAC) sont chacun configurés pour déterminer la valeur de sécurité respective en fonction d'une vitesse du véhicule (3), d'une vitesse d'un véhicule (4) roulant devant le véhicule (3) et d'une distance entre le véhicule (3) et le véhicule (4) roulant devant le véhicule (3).

7. Procédé (2) pour faire fonctionner un système d'assistance au conducteur d'un véhicule (3), comprenant les étapes :

   • Générer (21), au moyen d'un premier sous-système (PAC), un premier modèle d'environnement ;
   • Planifier (22), au moyen du premier sous-système (PAC), une ou plusieurs premières trajectoires pour le véhicule (3) en fonction du premier modèle d'environnement ;
   • Générer (23), au moyen d'un deuxième sous-système (SAC), un deuxième modèle d'environnement ;
   • Planifier (24), au moyen du deuxième sous-système (SAC), une ou plusieurs deuxièmes trajectoires pour le véhicule (3) en fonction du deuxième modèle d'environnement ;
   • Effectuer (25), au moyen du premier sous-système (PAC), une évaluation de sécurité à la fois de la ou des premières trajectoires et de la ou des deuxièmes trajectoires sur la base d'une métrique, dans lequel l'exécution (25) de l'évaluation de sécurité comprend l'attribution d'une valeur de sécurité numérique selon la métrique à chacune des premières et deuxièmes trajectoires ;
   • Effectuer (26), au moyen du deuxième sous-système (SAC), une évaluation de sécurité à la fois de la ou des premières trajectoires et de la ou des deuxièmes trajectoires sur la base de la métrique, dans lequel l'exécution (26) de l'évaluation de sécurité comprend l'attribution d'une valeur de sécurité numérique selon la métrique à chacune des premières et deuxièmes trajectoires ;
   • Sélectionner (27), au moyen d'un troisième sous-système (SEL), l'une des premières ou deuxièmes trajectoires planifiées sur la base de résultats des évaluations de sécurité du premier sous-système (PAC) et du deuxième sous-système (SAC) ; et
   • Délivrer (28) la trajectoire sélectionnée à un système de commande (TFR) du système d'assistance au conducteur ;

   **caractérisé en ce que**
   la sélection (27) de la trajectoire comprend que le troisième sous-système (SEL) compare, pour chacune des premières et deuxièmes trajectoires, la valeur de sécurité attribuée par le premier sous-système (PAC) avec la valeur de sécurité attribuée par le deuxième sous-système (SAC).

8. Logiciel avec code de programme pour effectuer le procédé (2) selon la revendication 7, lorsque le logiciel s'exécute sur un ou plusieurs dispositifs de calcul commandés par logiciel.

Fig. 1

Fig. 2

$TTR > MTTR$   $TTR_{S1} = 0$   $TTR_{S1} = TTR_{S2} = TTR_{S3} = 0$

$TTR < MTTR$   $TTR_{S1} = TTR_{S2} = 0$

A   B   C

3

4

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2018052453 A1
- DE 102013213169 A1
- DE 102021000369 A1